# EUROPEAN PATENT SPECIFICATION

(11) **EP 2 294 903 B1**
(45) Date of publication and mention of the grant of the patent: **04.06.2014**
(21) Application number: 09745340.1
(22) Date of filing: 15.05.2009
(51) Int. Cl.: H01H 9/02, H01H 9/04, H01R 12/79, G06F 1/16, H01M 2/10

(54) **RUGGEDIZED HOUSING AND COMPONENTS FOR A HANDHELD DEVICE**
ROBUST GEMACHTES GEHÄUSE UND KOMPONENTEN FÜR EIN HANDGERÄT
LOGEMENT TOUT-TERRAIN ET COMPOSANTS POUR DISPOSITIF PORTABLE

(30) Priority: 16.05.2008 CA 2631447
(43) Date of publication of application: 16.03.2011
(73) Proprietor: Psion Inc., Mississauga, ON L5N 7J9 (CA)
(72) Inventor: MANGAROO, Alan, Oakville Ontario L6H 6B5 (CA)
(74) Representative: Treleven, Colin
(86) International application number: PCT/CA2009/000654
(87) International publication number: WO 2009/137925

(56) References cited:
- US-A1- 2003 013 506
- US-A1- 2003 222 845
- US-A1- 2004 127 270
- US-A1- 2004 127 270
- US-A1- 2008 055 258
- US-B1- 6 488 425
- US-B1- 6 488 425
- US-B2- 7 065 835

## Description

### FIELD OF INVENTION

The present invention relates to handheld electronic devices, and more specifically to a housing and its components for rugged handheld electronic devices.

### BACKGROUND OF THE INVENTION

The use of handheld devices in harsh environments has increased. For example handheld devices may be used in the Field Service, Courier / Delivery, Asset Tracking, Meter Reading, Ticketing, Retail, Livestock Tracking, and Warehousing. Handheld devices used in harsh environments may not only have to function in a wide range of operating temperatures, they may also have to withstand harsh treatment such as repeated drops onto hard surfaces. The environment that the electronic devices function in may also be dusty or wet, and as such the handheld device should prevent against the ingress of dust and water.

Rugged handheld devices that can meet the requirements of these harsh environments have unique design considerations, in addition to the design considerations of non-rugged handheld devices. For example, in order to ensure that water or dust does not enter the handheld device, the handheld device may need to meet or surpass Ingress Penetration (IP) 65 tests. Typically this has required the sealing of connections between housing components or parts using a gasket or similar seal. This can cause problems during assembly of the handheld device as the gasket must be seated correctly prior to securing housing components together. Additionally, the use of gaskets can make the resealing of housing components together in the field difficult. This has led to reducing the number of housing component connections required. While this can create a rugged device, it can make fixing the rugged handheld device in the field difficult since reducing the number of connections makes the modular replacement of components difficult.

The environment that rugged handheld devices are used in, in general results in parts needing to be replaced more often than non-rugged handheld devices. For example a touch screen may be broken by the repeated use of a screwdriver as a stylus. Docking connectors may break through repeated docking and undocking, and keyboards or keypads may wear out from use. Replacement of individual components in the field may be difficult using typical housing designs for rugged handheld devices.

Batteries of handheld devices often need to be replaced. In order to preserve information during battery replacement it is typical to include a backup battery in handheld devices. However, the size of the handheld device is limited, and the placement of the backup battery has been placed typically on the main board electronics. This makes replacing the backup battery in the field difficult. As with the other components, it may require the complete or near complete disassembly of the handheld device.

It is desirable to provide a housing for a rugged handheld device that allowed for one or more of the components to be replaced individually. It is also desirable to provide a handheld device housing that can minimize a malfunction of the handheld device. It is further desirable to provide a rugged device and a housing for the rugged device that cooperate with each other so as to replace the device components smoothly and without causing the malfunction.

US-A1-2008/0055258 provides an electronic device enclosure having an integrated in-mold foil, which prevents fluid ingress around a display. A front housing and a rear housing are provided. A microprocessor/motherboard is located in a space created by the front and rear housings. A battery is located in a compartment formed within the rear housing. US-B1-6488425 provides an electronic device having a removable bezel to facilitate cleaning of a keypad structure. The electronic device includes a housing that defines and encloses an interior of the electronic device. US-A1-2004127270 provides a rugged hand held mobile terminal design. The mobile terminal design includes a monocoque enclosure for housing electronic components. The mobile terminal design also includes a display bezel. When the bezel is in place, a downward force is exerted on a gasket.

### SUMMARY OF THE INVENTION

Provided is a ruggedized housing and components for a handheld device, which obviates or mitigates at least one of the disadvantages of existing systems. In accordance with the invention, a housing having the features of appended claim 1 is provided.

In accordance with the present disclosure, there is provided a housing for a rugged handheld device, which includes: a main housing including: a main circuit board space sealed from an exterior environment, for supporting a main circuit board; and a compartment space for supporting a device component, the device component operably coupled to the main circuit board for operating the handheld device; and a removable compartment cover for sealing the compartment space from the exterior environment, independently from the sealing of the main circuit board space.

The housing for a rugged handheld device may include: a keyboard space for housing a removable keyboard assembly, a side of the keyboard space being defined by a side wall having a protrusion extended into the keyboard space, the keyboard assembly sealing the keyboard space when placed into the keyboard space, the keyboard assembly including: an elastomer sheet sized to substantially cover a printed circuit board having a first contact for generating a keystroke signal to the main circuit board via an electrical connection, the elastomer sheet having a second contact on a first side and a protrusion on a second side opposite the first side, the second contract being in contact with the first contact of the print circuit board, the protrusion being opposite the second contact on the first side; a keypad including a shell encasing the protrusion of the elastomer sheet; and a keyboard bezel having an aperture to receive the keypad, the keyboard bezel having a side wall around a perimeter of the keyboard bezel, the side wall of the keyboard bezel having an edge in contact with the elastomer sheet to form a sealed space bellow the elastomer sheet, the keyboard bezel being held in place in the keyboard space by an interference fit with the protrusion of the side wall defining the keyboard space.

The housing for a rugged handheld device may include: a display space for supporting a display assembly, the display assembly sealing the display space, the display assembly including: a frame including: an electrical contact with the ground circuit of the main circuit board, for forming an electromagnetic interference shield; a perimeter in sealed contact with the display space; and a recessed area for receiving a display, the recessed area having an aperture opening to the main circuit board space for connecting the display to the main circuit board.

### BRIEF DESCRIPTION OF THE DRAWINGS

These and other features of the invention will become more apparent from the following description in which reference is made to the appended drawings wherein:

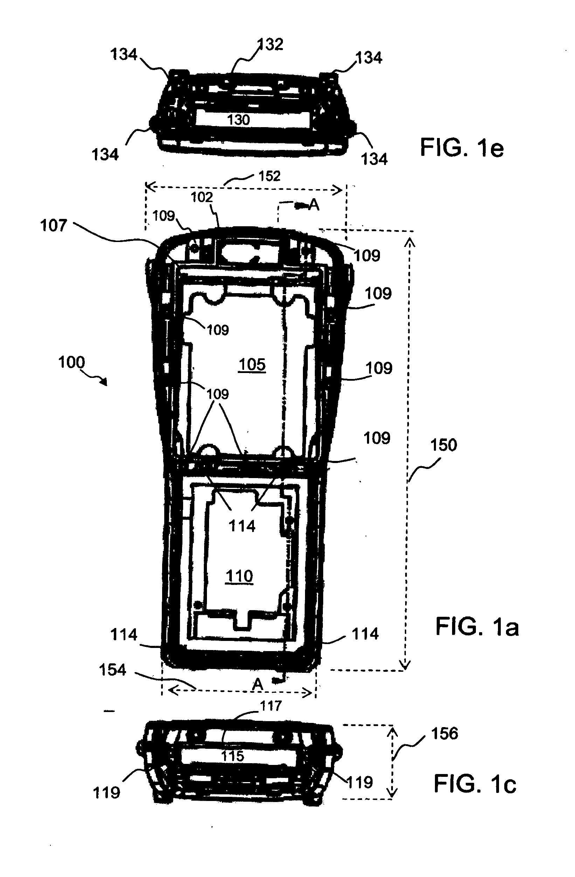

Figure 1a illustrates a front view of an example of a main housing of a ruggedized housing of the present disclosure;

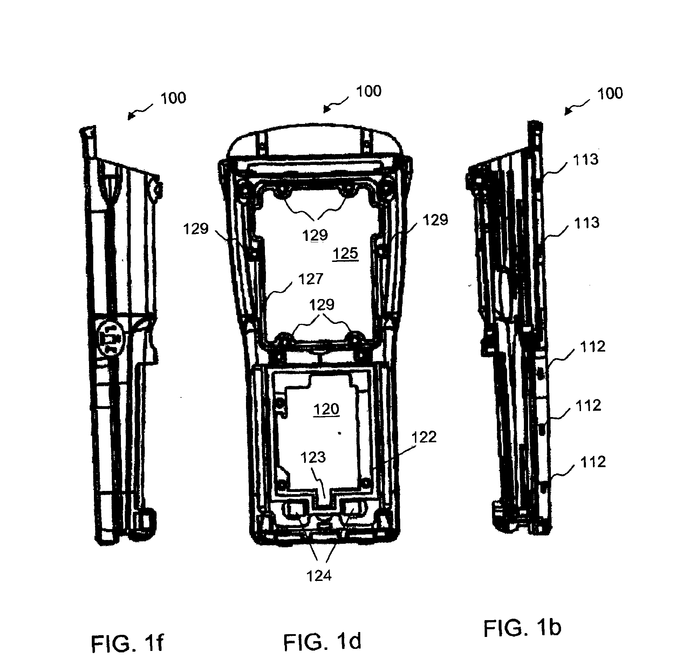

Figure 1b illustrates a sectional view of the main housing, taken along line A-A of Figure 1a;
Figure 1c illustrates a bottom view of the main housing of Figure 1a;
Figure 1d illustrates a back view of the main housing of Figure 1a;
Figure 1f illustrates a side view of the main housing of Figure 1a;
Figure 1e illustrates a top view of the main housing of Figure 1a;
Figure 2a illustrates an isometric view of an example of a display frame applicable to the main housing of Figures 1a-1f;
Figure 2b illustrates a front view of the display frame of Figure 2a;
Figure 2c illustrates a side view of the display frame of Figure 2a;
Figure 2d illustrates a back view of the display frame of Figure 2a;
Figure 2e illustrates a top view of the display frame of Figure 2a;
Figure 2f illustrates a bottom view of the display frame of Figure 2a;
Figure 3 a illustrates a plan top view of an example of a display bezel applicable to the main housing of Figures 1a-1f;
Figure 3c illustrates a sectional view of the display bezel, taken along line B-B of Figure 3a;
Figure 3d illustrates a back view of the display bezel of Figure 3 a;
Figure 3e illustrates a sectional view of the display bezel, taken along line C-C of Figure 3d;

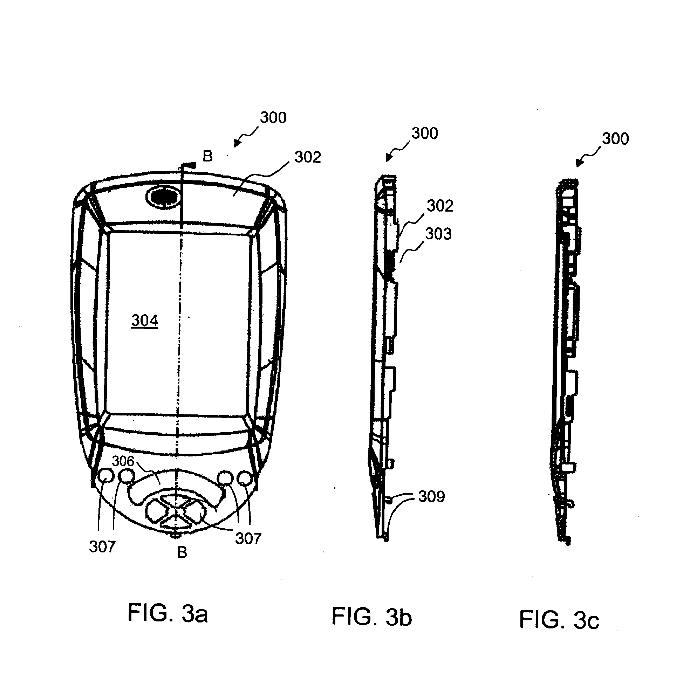

Figure 3b illustrates a side view of the display bezel of Figure 3a;

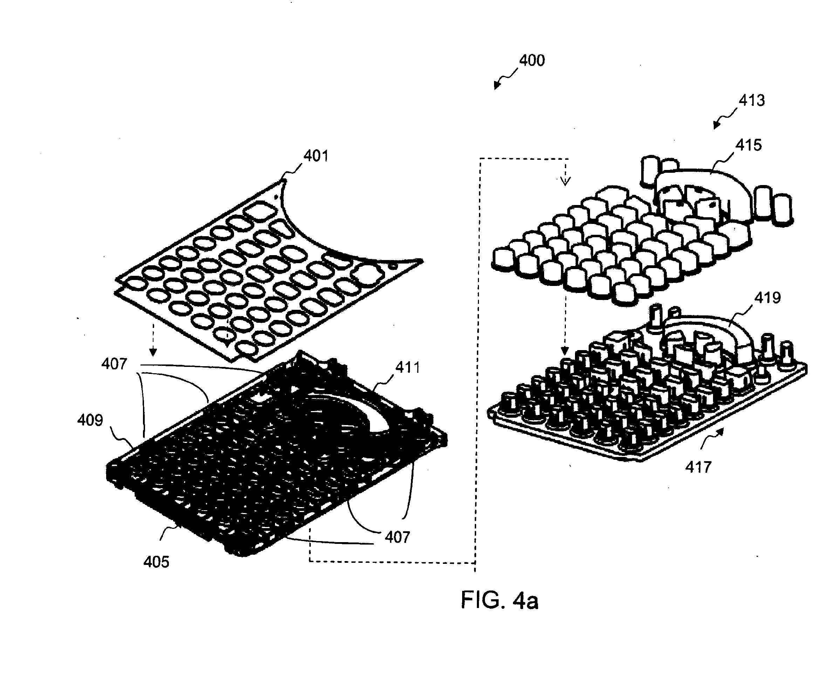

Figure 4a illustrates an exploded view of a keyboard assembly applicable to the main housing of Figures 1a-1f;

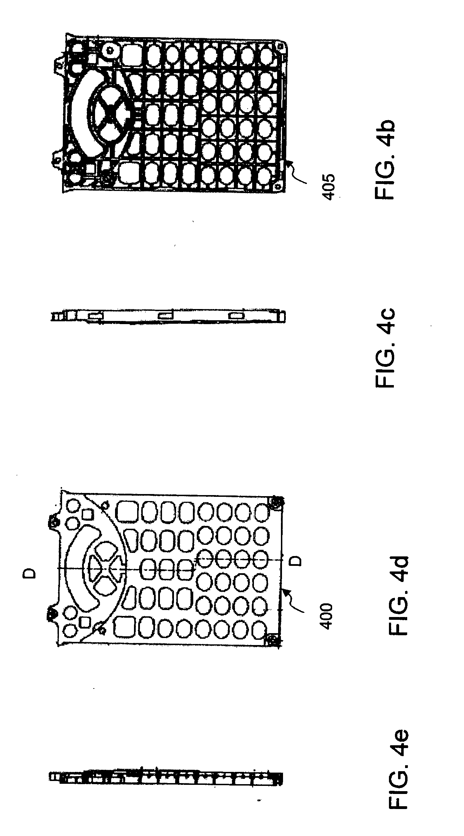

Figure 4b illustrates a front view of a keyboard bezel in the keyboard assembly of Figure 4a;
Figure 4c illustrates a side view of the keyboard assembly of Figure 4a;
Figure 4d illustrates a front view of the keyboard assembly of Figure 4a;
Figure 4e illustrates a sectional view of the keyboard assembly, taken along line D-D of Figure 4d;

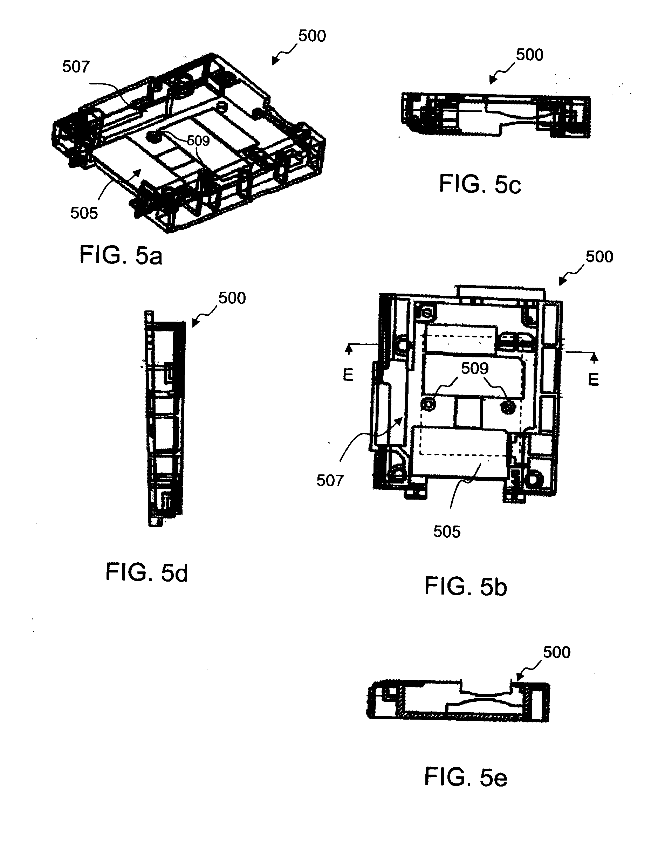

Figure 5a illustrates an isometric view of an example of a battery compartment applicable to the main housing of Figures 1a-1f;
Figure 5b illustrates a front view of the battery compartment of Figure 5a;
Figure 5c illustrates a top view of the battery compartment of Figure 5a;
Figure 5d illustrates a side view of the battery compartment of Figure 5a;
Figure 5e illustrates a sectional view of the battery compartment, taken along line E-E of Figure 5b;

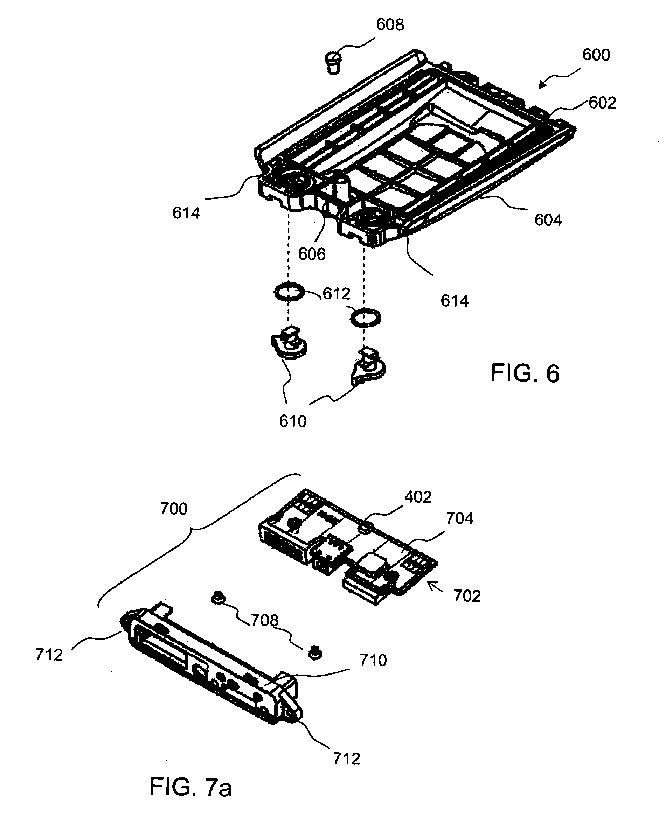

Figure 6 illustrates an isometric view of an example of a batter cover for the battery compartment of Figures 5a-5e;
Figure 7a illustrates an isometric view of an example of a docking connector according to the invention applicable to the main housing of Figures 1a-1f;

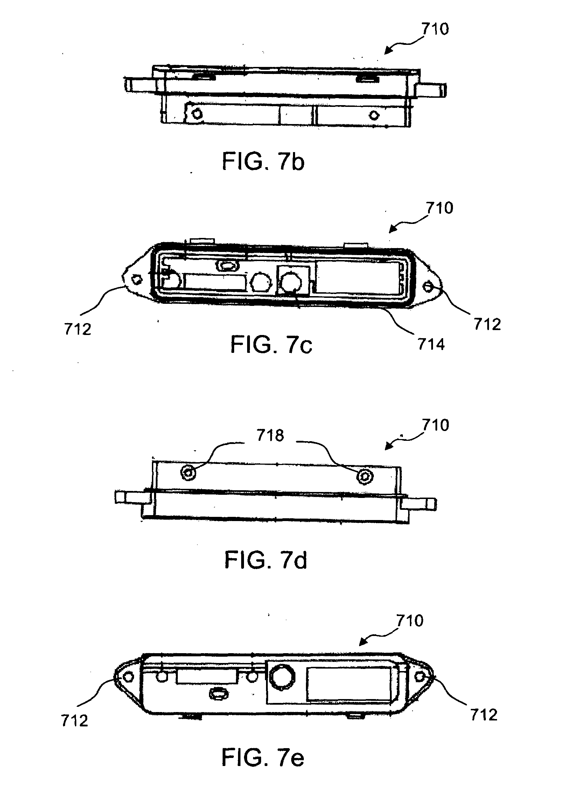

Figure 7b illustrates a top view of a connector holder for the docking connector of Figure 7a;
Figure 7c illustrates a back view of the connector holder of Figure 7b;
Figure 7d illustrates a bottom view of the connector holder of Figure 7b;
Figure 7e illustrates a front view of the connector holder of Figure 7b;

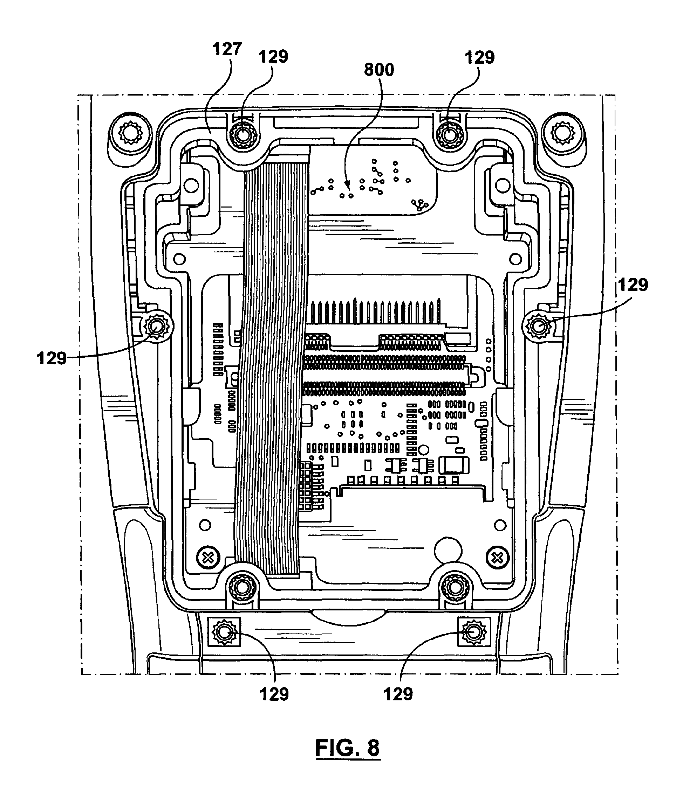

Figure 8 depicts in a photograph a detailed view of the main housing corresponding to Figures 1a-1f;

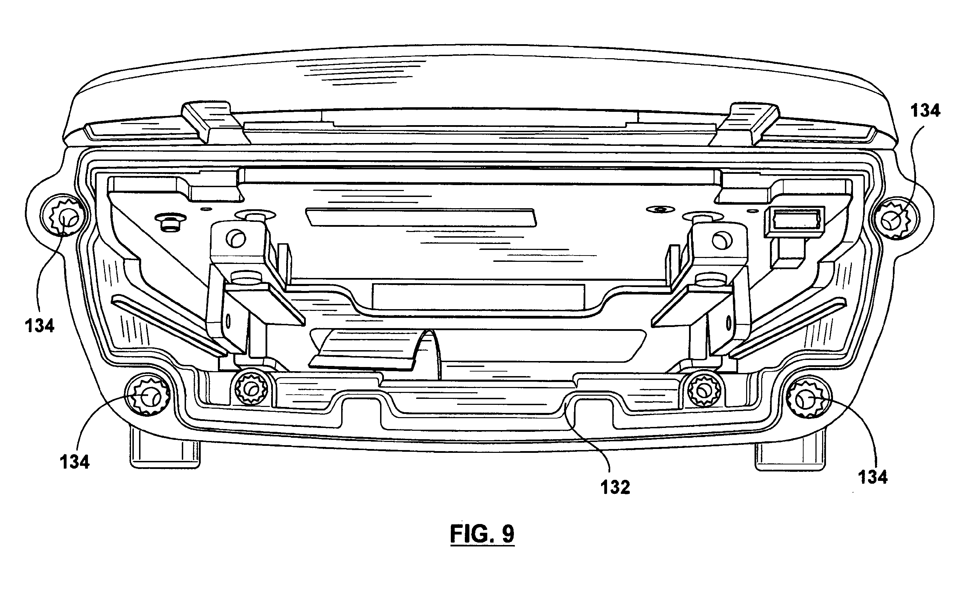

Figure 9 depicts in a photograph a detailed view of an end cap opening of the main housing corresponding to Figures 1a-1f;

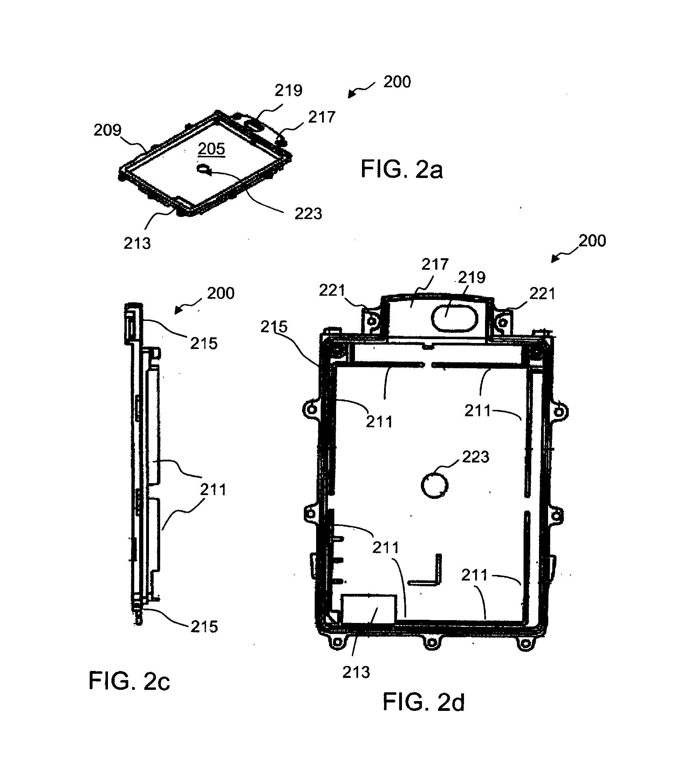

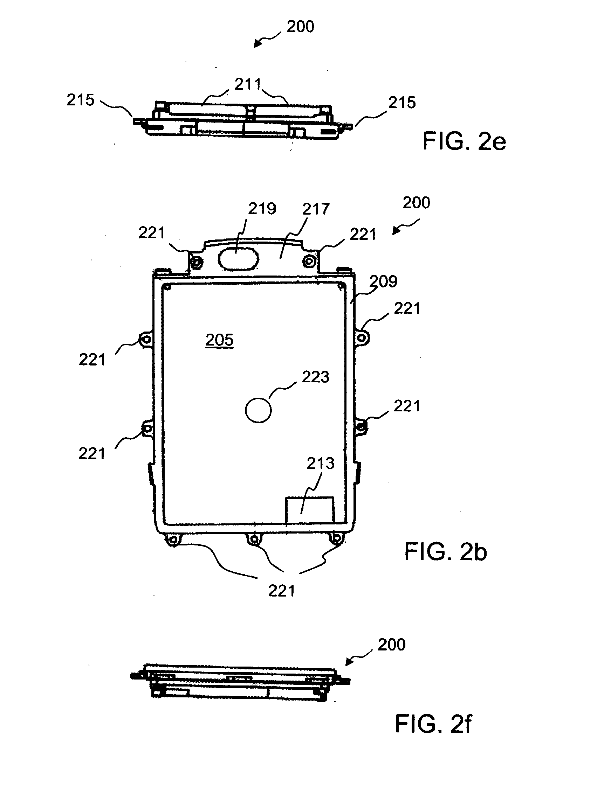

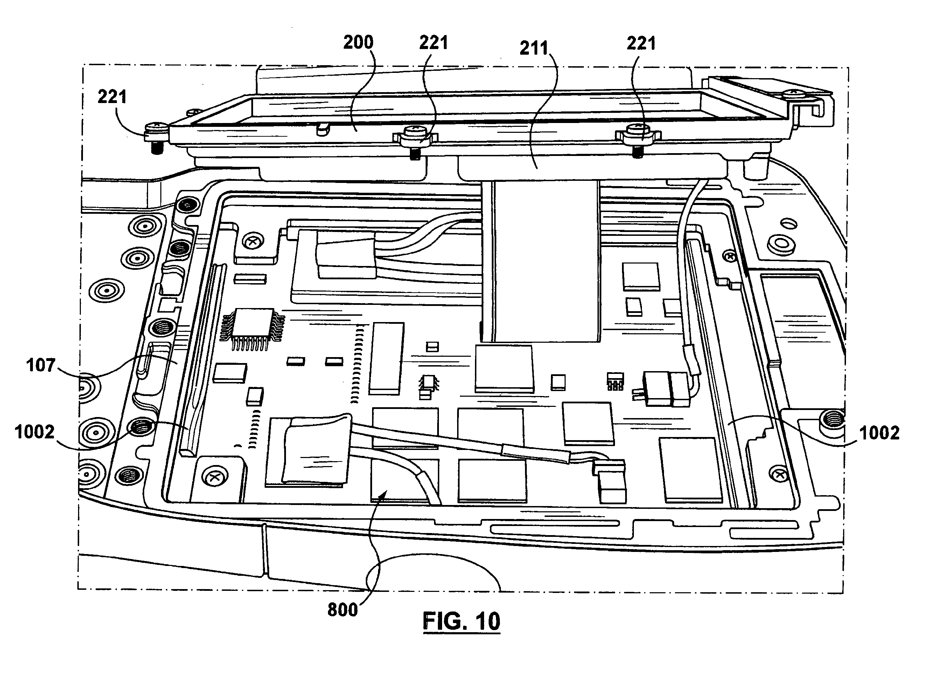

Figure 10 depicts in a photograph a detailed view of the main housing corresponding to Figures 1a-1f and the display frame corresponding to Figures 2a-2f;

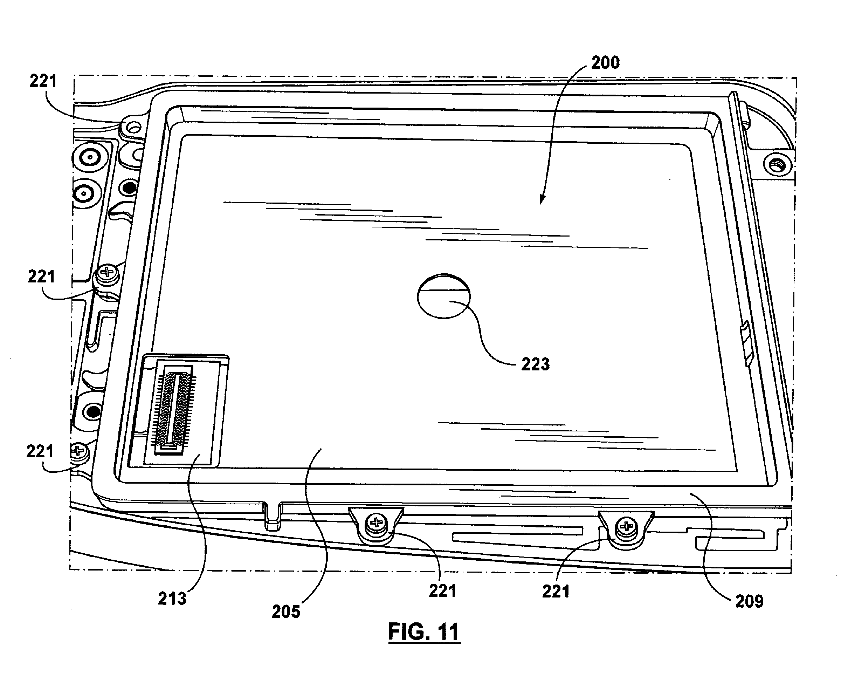

Figure 11 depicts in a photograph a detailed view of the display frame corresponding to Figures 2a-2f;

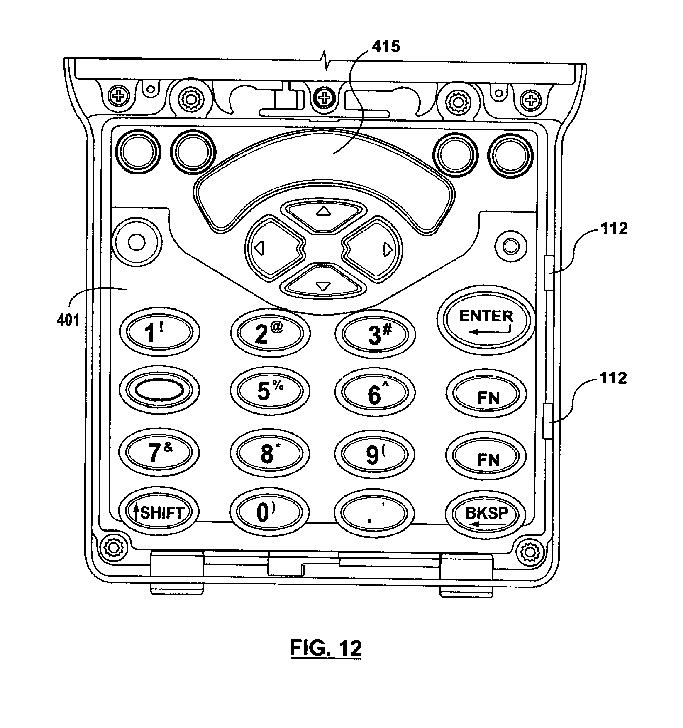

Figure 12 depicts in a photograph a detailed view of the keypad housing corresponding to Figures 4a-4d;

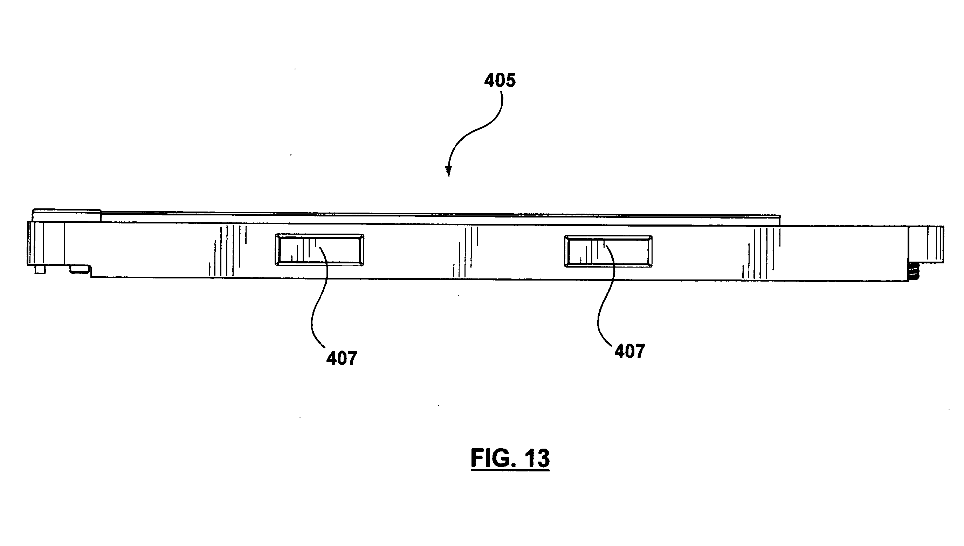

Figure 13 depicts in a photograph a detailed view of the keypad bezel corresponding to Figures 4a-4d;

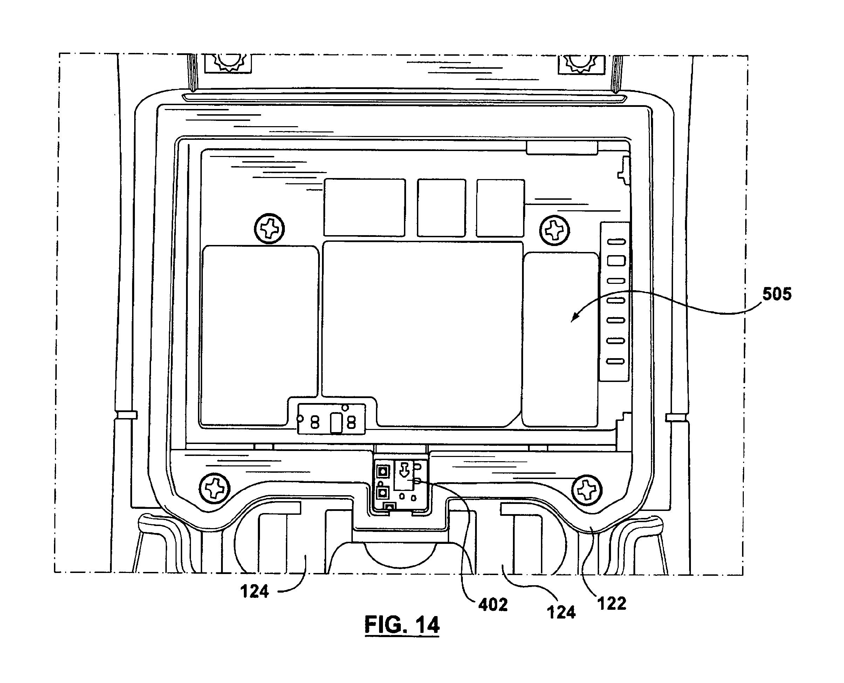

Figure 14 depicts in a photograph a detailed view of the battery compartment corresponding to Figures 5a-5e;

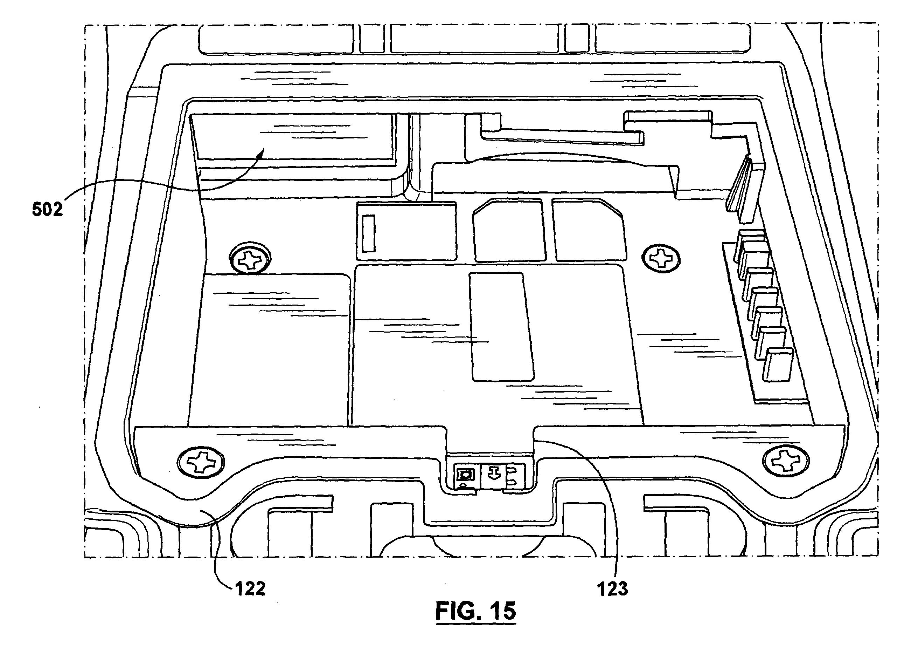

Figure 15 depicts in a photograph a detailed view of a backup battery for the battery compartment of Figure 14;

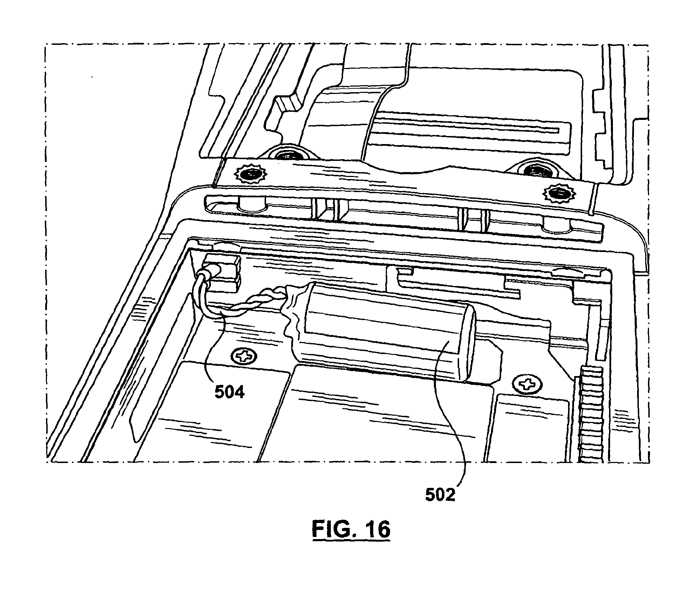

Figure 16 depicts in a photograph another detailed view of a backup battery for the battery compartment of Figure 14;

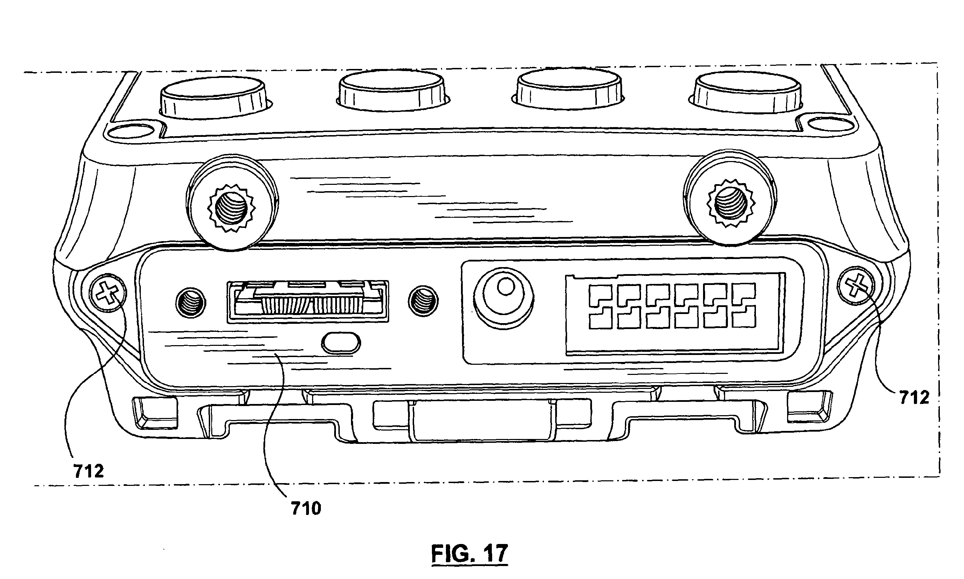

Figure 17 depicts in a photograph a detailed view of the docking connector corresponding to Figures 7a-7e; and

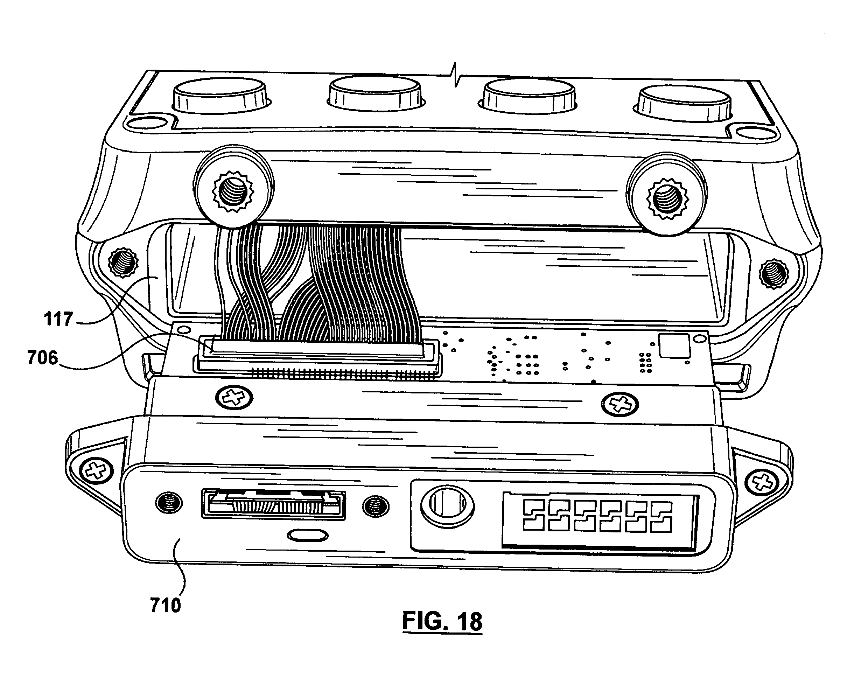

Figure 18 depicts in a photograph another detailed view of the docking connector corresponding to Figures 7a-7e.

### DETAILED DESCRIPTION

One or more currently preferred embodiments have been described by way of example. It will be apparent to persons skilled in the art that a number of variations and modifications can be made without departing from the scope of the invention as defined in the claims.

Examples of uses of the present invention are described in a rugged handheld device having device components, such as a display, a keyboard or key pad, a battery, main board electronics, a docking connector for connecting the handheld device to another computer or power source, for example, located in a vehicle (such as a forklift) or combinations thereof. The handheld device may also include additional or auxiliary electronics such as, a barcode reader, RFID reader and/or writer, a smart card reader, image capture device, etc.

The handheld device has a front and back of the device. For clarity and without loss of generality, the front of the device is generally referred to as the side of the handheld device having the display and keypads. The back of the device is the side opposite the front. The left side of the device is the left side connecting the front side with the back side when seen from the front. The right side of the device is the right side connecting the front side with the back side when seen from the front. The top of the device is located closer to the display, while the bottom is located closer to the keypad or keyboard.

Referring to Figures 1a - 1f there is shown an example of a main housing 100 for a rugged handheld device. The main housing 100 allows for individual components of the handheld device to be replaced in the field, while maintaining the IP 65 rating of the device. The main housing 100 has, for example, a general overall length 150 of approximately 220mm, a top width 152 of approximately 100mm, a bottom width 154 of approximately 75mm and an overall thickness 156 of approximately 40mm.

The main housing 100 includes spaces for receiving device components of the handheld device. In this example, these spaces include a display space 105 for housing a display or display assembly, a keyboard space 110 for housing a keyboard or keypad assembly, a connector space 115 for housing a docking connector, and a battery space 120 for housing a battery or battery compartment. The main housing 100 further includes a main circuit board housing (interior space) 125 for housing the main circuit board of the handheld device (e.g., 800 of Figure 8), and an expansion board space 130 for housing an expansion board or auxiliary component.

The spaces 105, 110, 115, 120, 125 and 130 are formed individually so as to allow the different components to be replaced in the field. The rugged handheld device is formed by assembling a housing having the main housing 100 and device components having the display, the keyboard assembly, the docking connector, the battery, the main circuit board, and the expansion board or auxiliary component.

One skilled in the art will appreciate that the main circuit board referred to above includes the electronics for operating the handheld device. It includes, for example, a processor, and memory. The main circuit board can be electrically coupled to the different components. A cable can lead from the main circuit board to the display, keyboard, docking connector, and auxiliary component. The main circuit board may also be electrically connected to the battery for powering the main circuit board and the attached components.

One of ordinary skill in the art will appreciate that the handheld device using the main housing 100 may include device components other than the display, the keyboard, the docking connector, the battery, and the main circuit board, and the expansion board or auxiliary component.

The housing of the handheld device includes the main housing 100 and additional housing sections such as a battery cover, and a back cover for sealing the main circuit board housing 125. In order to maintain an IP65 rating for the handheld device the component spaces could be sealed using a gasket or separate seal as is well known. However, gaskets may be difficult to seat correctly when replacing components in the field. This can cause the required seal to be compromised, and result in the device no longer being IP65 rated.

In order to provide the necessary seal around the component spaces while making field replacement of individual components easy, the main housing 100 includes overmold sections that replace the separate gaskets. Each overmold section is formed around the perimeter of the aperture of the corresponding component space in the main housing 100, to seal the aperture. In this example, the overmolded section is created around the entire perimeter of each aperture of the component spaces 105, 115, 120, 125 and 130. The keyboard space 110 of the main housing depicted in Figure 1a does not include an overmold section. The keyboard space 110 is sealed as described further herein.

In the description, the terms "overmold section", "overmolded section" and "overmolding section" may be used interchangeably.

The sealing of the component spaces is described with reference to the main circuit board space 125 of Figure 1d. The main circuit board space 125 includes an aperture in the main housing 100 through which the main circuit board can be accessed. The aperture is sufficiently sealed in order to provide the required performance, for example IP65. The sealing includes the overmolded perimeter 127, and a back cover that fits over the aperture. The back cover includes an edge along its sealing surface (that is the surface that presses against the main housing). The edge is shaped to match the shape of the overmolded section 127. The edge of the back cover presses into the overmolded section so that when the back cover housing is secured, for example using appropriate screws in the threaded sections 129 of the main housing 100, the aperture of the main circuit board space 125 is sealed.

When forming the main housing 100, first the substrate of the main housing 100 is molded. The substrate of the main housing 100 is substantially the main housing 100, except that the overmolding is not present. The substrate of the main housing 100 may be molded from an ABS type material, for example GE C1200. With the substrate of the main housing 100 molded, the overmolding is then molded on top of the substrate. The overmolding is formed around the apertures to be sealed. The overmolding forms a continuous perimeter around the aperture. The overmolding forms a chemical bond with the substrate to ensure a substantial seal. The overmolded section provides a contiguous surface that an edge of a sealing housing or part can press against, and partially into.

In order to provide an adequate seal, the overmolded section forms a chemical bond with the substrate, and provides a semi resilient surface that an edge of the sealing surface can bite into. When using GE C1200 as the substrate, an appropriate material for the overmold is, for example, a thermoplastic rubber (TPR) with a hardness of 45-55 degree.

Each of the component spaces 105, 115, 120, and 130 has an aperture that is sealed by its corresponding overmolded section. The aperture of the display space 105 is sealed by using an overmolded section 107. The aperture of the connector space 115 is sealed by using an overmolded section 117. The aperture of the battery space 120 is sealed by using an overmolded section 122. The aperture of the expansion board space 130 is sealed by using an overmolded section 132.

An end cap or auxiliary component, forms a seal with the overmold section 132 of Figure 1e. The end cap can be secured in place using screws and threads 134. An edge of the end cap presses against the overmold section 132 to seal the aperture 130.

The sealing of the display space 105 is described further with reference to Figures 2a - 2e. The sealing of the keyboard space is described further with reference to Figure 4. The sealing of the battery space is described further with reference to Figures 5a-5e and 6. The sealing of the connector space 115 is further described with reference to Figures 7a-7e.

Referring to Figures 1a-1f and Figures 2a-2f, the sealing of the display space 105 and associated components are described in detail. Figures 2a - 2f illustrate an example of a display frame 200 for use in the main housing 100. The display frame 200 provides support for mounting the display as well as providing shielding to the main circuit board from electromagnetic interference. The display frame 200 is formed by a metal or a conductive material. The display frame 200 may include a structure for providing support to a receiver. For example structure 217 provides support for a receiver within the aperture 219. The display frame 200 also provides a means of sealing the display space 105. Displays may be delicate and unable to withstand the force required to form an adequate seal with the overmolded sections. In order to seal the display space 105, the display frame 200 is secured to the display space overmolded section 107 using screws through tabs 221 into threads 109. The display frame 200 includes an edge 215 along its perimeter shaped to match the overmold section 107. The edge 215 presses into the overmold section sealing the display frame 200 to the main housing 100. However as can be seen in Figures 2a, 2b, 2d the display frame 200 includes two apertures 213 and 223 in the surface of the recess 205, which are open to the main circuit board. The display space 105 is sealed from the external environment when a display is placed in the recess 205. The display may be connected to the main circuit board by a connection passing through the opening 213 in the base of the recess 205. With the display in the recess 205, the display space can be sealed by pressing an adhesive sheet around the perimeter 209 of the display frame 200 and onto the perimeter of the display. The adhesive sheet may be for example a Mylar sheet with an adhesive on one side. The Mylar sheet seals the display to the display frame 205, which in turn is sealed to the main housing 100. This arrangement allows for the display space to be sealed without overly stressing the display, or covering the display with another layer. The Mylar adhesive does not need to cover the entire surface of the display, it only needs to seal the perimeter 209 of the display with the top of the display frame 200. The apertures (hole) 223 is used as an aid to remove the display from the display frame 200 by pressing through the hole 223 on the back of the display frame 200.

In addition to providing support for the display and a means of sealing the display space, while preventing stress to the display, the display frame 200 also can provide an electromagnetic interference (EMI) shield for the main circuit board. To provide the shielding the bottom surface of the display (that is the side opposite the recess 205) include bars 211 that protrude down towards the main circuit board. The bars 211 contact corresponding bars located on the main circuit board. The bars on the main circuit board are EMI gaskets and are connected to the copper ground trace of the main circuit board. When the display frame 200 is secured to the main housing 100, the bars 211 come into contact with the bars of the main circuit board. The display frame 200 and the bars 211 are made of a conductor, for example aluminum or aluminum alloy. The display frame 200 acts as a ground plane to shield from EMI.

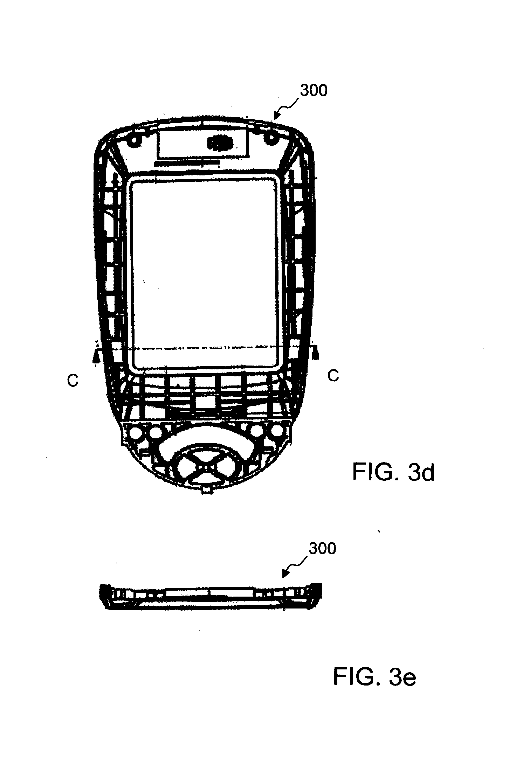

Referring to Figures 3 a -3e there is shown an example of a display bezel 300 that can be fixed to the main housing 100 of Figures 1a -1f, for decorative purposes. The display bezel 300 includes a molded body 302, with an aperture 304 for the display. The main housing 100 has projections 113 that cooperate with indents 303 of the display bezel 300 to secure the display bezel 300. Tabs 309 may slot into corresponding apertures on the keypad bezel (e.g., 400 of Figure 4) to secure the display bezel 300. The aperture 306 may be large so that the keypad present in the aperture may be operated one handed regardless of what hand the device is held in. For example the keypad location 306 may be operated using the thumb of the right hand or the left hand.

This elongated keypad (413 of Figure 4) associated with the aperture 306 may be used for a common action such as initiating a barcode scan. Some previous handheld devices used multiple scan buttons to provide ambidextrous scanning functionality. By elongating the scan button and its corresponding aperture 306 on either side of the longitudinal centerline, the button can be operated regardless of what hand is used.

Refereing to Figures 1a-1f and 4a-4e, the sealing of the keyboard space 110 and associated keyboard components are described in detail. Figures 4a-4e illustrate an example of components of a keyboard assembly 400. The keyboard assembly 400 includes a keyboard circuit board (not shown) that connects to the main circuit board and sits in the keyboard space 110. The keyboard assembly 400 is secured into the keyboard space 110 using screws and threads 114. The keyboard circuit board may include electrical traces that form part of a key switch. The key switch is completed by an electrical contact by a carbon pills on the underside of an elastomer 417. The elastomer 417 sits on top of the keyboard circuit board. The elastomer 417 has a number of protrusions on the side opposite the contacts. The protrusions are located above the contacts. Hard keycaps 413 are placed over the protrusions of the elastomer 417. When a keypad is pressed the contact under the protrusion presses against gold pads of the keyboard circuit board and completes a circuit sending a signal that can be sued to identify the key that was pressed.

In order to seal the keyboard space 110, a keyboard bezel 405 is placed on top of the hard keypads 413 and the elastomer 417. The key board bezel 405 has a perimeter surface 409 that presses down around the entire perimeter of the elastomer 417 contact pad to provide a seal. The keyboard bezel 405 may be held in place by projections 112 that project from the side wall of the keyboard space into the keyboard space. The projections 112 cooperate with indents 407 of the keyboard bezel 405 to form an interference type fit securing the keyboard bezel 405 in place. A keyboard sheet 401 (e.g., mylar) may be placed on top of the keyboard bezel 405. Some characters are printed on the keyboard sheet 401, which correspond to keys and visually indicate the keys' functions.

Referring to Figures 1a-1f and 5a-5e, the battery space 120 and associated battery components are described in detail. Figures 5a-5e illustrate an example of a battery compartment 500. The battery compartment 500 can be secured (for example using holes 509) in the battery space 120 of the main housing 100. The battery compartment 500 may be sealed by a battery cover (e.g., 600 of Figure 6) as described further below. Handheld devices may include a backup battery for providing temporary power. For example when the main battery is being replaced temporary power can be supplied by the back up battery so that there is no loss of information. The backup battery may also provide power to maintain the date and time when the handheld device is turned off. In previous devices the main battery is typically easily accessible, however the backup battery has been mounted internally and not easily accessible. By contrast, in this example, the battery component 500 is formed so that the backup battery can be replaced easily. The battery compartment 500 includes a main battery space 505 for receiving and housing a main battery, as well as a backup battery space 507 for receiving and housing a backup battery. The backup battery is not directly mounted on the main circuit board. The backup battery is connected to the main printed circuit board via a harness, such as an electrical harness (e.g., cable harness). The main battery and the backup battery may be coupled to the main circuit board using different electrical harnesses (not shown), by making minimal change to the design of the main circuit board. As can be seen from Figures 5a and 5b, the backup battery space 507 is located adjacent to the main battery space 505. As such the backup battery can be removed or replaced when the main battery is not in the main battery space 505. The user opens the battery cover, removes the main battery, and then removes the backup battery. The backup battery is removed without removing the battery compartment 500 from the battery space 120.

The main housing 100 may include a switch to signal if the battery cover is opened. As described further below, this can be used as an indication that the main battery is going to be removed, and that the power should be shut down or switched to the backup battery to avoid loss of data.

Referring to Figure 6, there is shown an example of a battery cover 600 for sealing the battery space 120 of Figure 1d. Referring to Figures 1d and 6, the battery cover 600 includes a substrate 604 that has an edge 602 shaped to match the overmolded section 122 of the battery space 120. The batter cover 600 includes two latches 610 that fit through corresponding openings 614 in the batter cover. The openings 614 are sealed using an o-ring 612. The two latches 610 can be rotated in the openings 614 in order to engage with apertures 124 adjacent to the battery space 120. The latches 610 bear against a surface of the aperture 124 to secure the battery cover 600 in place, and ensure that the edge 602 is pressed firmly against the overmolded section 122.

The battery cover 600 includes a protrusion 606. The protrusion 606 operates a switch (e.g.,402 of Figures 7 and 14) placed in the switch space 123. The switch sends a signal to the main circuit board to indicate whether the battery cover is on or not (e.g., being opened). If the battery cover is not on (the protrusion 606 is not located in the switch space 123) the hand held device may be prevented from turning on, or it may power down in preparation of battery removal. The switch may be used to shutdown the handheld device and store information temporarily using the backup battery. The switch may be used to ensure that the handheld device is not operated without the battery cover securely attached. In rugged handheld devices, the switch can be operated even when the battery cover is on. If the handheld device is dropped (for example from 1.2 meters onto concrete), the impact can cause the switch to operate which may cause the handheld device to shutdown. In order to avoid such an error operation while maintaining the resistance to dropping, the protrusion 606 is covered with an elastic sleeve 608 (e,g, rubber sleeve), hereinafter referred to as rubber sleeve 608). The rubber sleeve 608 bears against the switch and absorbs the impact when the handheld device is dropped, ensuring that the switch does not accidentally operate.

Referring to Figures 7a-7e, there is shown an example of a docking connector section (or compartment) 700. The docking connector section 700 includes a connector board 702 fastened to a connector holder 710 with screws 708. The connector board 702 includes a printed circuit board 704, connector electronics (not shown) and a harness (e.g., 706 of Figure 18) for electrically coupling the connector board 702 with the main circuit board. The harness (706) is, for example, detachably coupled to a cable coupling to the main circuit board. The connector holder 710 has holes 718 on its bottom. The connector board 702 is assembled with the connector holder 710 by tightening the screws 708 into the holes 718. Docking connectors allow the handheld device to be mounted in vehicles such as forklift, delivery vans, trucks etc. or be connected to peripherals such as printers or to other computer systems to download information. The connector may wear out or break. The docking connector section 700 can be easily replaced in the field by removing the connector holder 710 from the main housing 100.

As described above the connector space 115 includes a connector overmold section 117. The connector holder 710 includes an edge 714 that presses into the connector overmold section 117 to seal the connector space 115. The docking connector 700 is secured to the main housing 100 using tabs 712 having holes with appropriate fasteners such as screws. The holes of the tables 712 are fixed with the holes (119 of Figure 1c) of the main housing 100. The fasteners are accessible from the exterior of the handheld device. Unlike previous handheld devices that secured the docking connector using internal fasteners, the current docking connector 700 can easily be replaced in the field while maintaining the IP65 rating of the handheld device. The length of the cable connecting the connector board to the main circuit board should be long enough to allow the docking connector 700 to be removed from the main housing. However it should be noted that making the cable too long can result in the cable interfering with the seal between the edge 714 and the overmolded section 717.

Referring to Figure 8 there is shown in a photograph a detailed view of a back of the main housing corresponding to 100 of Figures 1a-1f for a rugged handheld device. The main circuit board 800 is seen in the main housing. The overmolded section 127 for sealing the opening is shown.

Referring to Figure 9 there is shown in a photograph a view of the top of the main housing corresponding to Figure 1e for the handheld device. The overmolded section 132 is shown.

Referring to Figure 10 there is shown in a photograph a view of the display frame corresponding to 200 of Figures 2a-2f and the display space overmolded section corresponding to 107 of Figure 1a. The bars 211 of the display frame are shown as well as corresponding bars 1002 on the main circuit board. Also shown is the main circuit board 800.

Referring to Figure 11, there is shown a photograph of the display frame corresponding to 200 of Figures 2a-2f. The recess 205 having two openings 213 and 223 are shown. The exterior frame 209 for sealing to the display is also shown.

Referring to Figure 12 there is shown in a photograph a view of a partially assembled keypad assembly of the handheld device, associated with 400 of Figures 4a-4e. The protrusions 112 are shown. The elastomer contact pad is also shown located on top of the keypad circuit board. The hard key pads 415 are shown on top of the protrusions of the elastomer contact pad.

Referring to Figure 13 there is shown in a photograph a side view of the keyboard bezel corresponding to 405 of Figures 4a-4e, for the handheld device. The indents 407 in the side wall of the bezel are shown.

Referring to Figure 14 there is shown in a photograph the battery compartment corresponding to 500 of Figures 5a-5e. The overmolded section 122 for sealing the battery space is shown. The switch 402 for signaling if the cover is attached is also shown.

Referring to Figures 15 and 16 there is shown the backup battery 502 located in the backup battery space (507 of Figure 15), as well as removed from the backup battery space. As can be seen in figure 16, the backup battery 502 may be connected to an electrical harness via wires 504.

Referring to Figures 17 and 18, there is shown in photographs the docking connector corresponding to 700 of Figures 7a-7e, for the handheld device. Figure 17 shows the connector holder 710 secured to the main housing using externally accessible fasteners 712. Figure 18 shows the docking connector 700 removed from the main housing. The connector holder 710 has been unscrewed from the main housing. The overmolded section 117 is shown. The connector 706 is shown, the connecting wires of an appropriate length so as to allow the docking connector to be removed from the main housing, but not interfere with the seal between the edge of the connector holder and the overmolded section.

The housing for a handheld device described herein provides for individually replaceable components which provides greater lifespan for the handheld device since if a component breaks it can easily be replaced. Further more, the replacement of the individual components can be easily accomplished in the field while maintaining the ruggedness of the handheld device. Gaskets are not required, which can provide a poor seal if not seated correctly. The use of gaskets has been replaced with an overmold section surrounding openings in the main housing. The substrate of the housing is provided, for example, by GE C1200 and the overmolded sections by TPR.

Furkher still the single piece display frame described provides for EMI shielding, sealing of the display space, and providing a strong display mounting point. The display frame is a single piece and so requires less time to assemble during manufacture, and can be replaced quicker and easier in the field.

Further still, the ergonomic scan keypad allows its operation using either hand. The keypad is located centrally along a longitudinal axis of the handheld device and extends laterally an equal distance to both sides, allowing operation with, for example, the left thumb or the right thumb.

Further still an advantageous battery compartment is described that provides for the easy replacement of the backup battery when the main battery is not in the battery compartment. A rugged battery cover that provides greater resistance to undesired operation of a battery cover switch is described.

Further still the docking connector provides for easy field replacement through externally accessible fastening means.

## Claims

1. A housing for a rugged handheld device comprising:
a main housing (100) including:
a main circuit board space (125) sealed from an exterior environment, for supporting a main circuit board (800);
a connector space (115) for supporting a device component, the device component operably coupled to the main circuit board (800) for operating the handheld device, the device component comprising a connector board (702) removably coupled to the main circuit board (800);
a removable compartment cover for sealing the connector space (115) from the exterior environment, independently from the sealing of the main circuit board space (125), the compartment cover comprising a connector holder (710) for housing the connector board (702) in the compartment space;
the connector holder (710) and connector board (702) together forming a docking connector (700); and
the connector holder (710) being secured to the main housing (100) with removable fasteners, whereby the docking connector (700) is accessible from the exterior of the main housing (100).

2. A housing according to claim 1, wherein:
a second device component comprises a battery in a battery space (120); and
a second compartment cover (600) comprises a protrusion (606) for operating on a switch (402) for communicating with the main circuit board (800), the protrusion (606) being covered by an elastic cover for absorbing external impact on the cover when the cover is secured to the main housing (100).

3. A housing according to claim 2, further comprising:
the switch (402) being on the connector board and being placed in the connector space (115) when the connector board (702) is in the connector space (115).

4. A housing according to claim 2 or claim 3, wherein the elastic cover comprises:
a rubber sleeve.

5. A housing according to any of claims 2-4, wherein the second device component comprises:
a main battery for supplying power to the handheld device; and
a backup battery (502) for supplying power to the handheld device when the main battery is not present, and
wherein the battery space (120) comprises:
a main battery space (505) for holding the main battery, the main battery being accessible through the second compartment cover and removably placed in the main battery space; and
a backup battery space (507) for holding the backup battery (502), the backup battery being removable from the backup battery space (507) through the main battery space (505) when the main battery is not present in the main battery space (505).

6. A housing according to any previous claim, wherein the connector space (115) is sealed by a corresponding overmolded section (117) and an edge section (714) of the connector holder (710).

7. A housing according to any previous claim, wherein the main housing (100) comprises at least one of:
a space (105) for holding a display in the housing;
a space (110) for holding a keyboard in the housing; and
a space (130) for holding an expansion board or auxiliary component in the housing,
and wherein each of the spaces and the connector space (115) is individually sealed from the exterior environment.

8. A housing according to claim 1, further comprising:
a keyboard space (110) for housing a removable keyboard assembly (400), a side of the keyboard space (110) being defined by a side wall having a protrusion extended into the keyboard space (110), the keyboard assembly (400) sealing the keyboard space (110) when placed into the keyboard space (110),
the keyboard assembly (400) comprising:
an elastomer sheet (417) sized to substantially cover a printed circuit board having a first contact for generating a keystroke signal to the main circuit board (800) via an electrical connection, the elastomer sheet (417) having a second contact on a first side and a protrusion on a second side opposite the first side, the second contact being in contact with the first contact of the print circuit board, the protrusion being opposite the second contact on the first side;
a keypad (413) comprising a shell encasing the protrusion of the elastomer sheet; and
a keyboard bezel (405) having an aperture to receive the keypad, the keyboard bezel (405) having a side wall around a perimeter of the keyboard bezel (405), the side wall of the keyboard bezel (405) having an edge in contact with the elastomer sheet to form a sealed space below the elastomer sheet, the keyboard bezel (405) being held in place in the keyboard space (110) by an interference fit with the protrusion of the side wall defining the keyboard space (110).

9. A housing according to claim 1, further comprising:
a display space (105) for supporting a display assembly, the display assembly sealing the display space (105),
at least one of a space (110) for holding a keyboard in the housing and a space (130) for holding an expansion board or auxiliary component in the housing,
each ofthe spaces being individually sealed from the exterior environment,
the display assembly comprising a frame (200), the frame (200) including:
an electrical contact (211) with a ground circuit of the main circuit board (800), for forming an electromagnetic interference shield;
a perimeter (209) in sealed contact with the display space; and
a recessed area (205) for receiving a display, the recessed area having an aperture opening to the main circuit board (800) space for connecting the display to the main circuit board (800).

10. A housing according to claim 9, wherein the perimeter of the frame (200) is sealable to the surface of the display using an adhesive material.

11. A housing according to claim 9 or claim 10, wherein the frame (200) is a metal frame acting as a ground plane.

12. A housing according to claim 9, wherein the frame (200) comprises:
a back side opposite to a side having the sealed perimeter, the back side having the electrical contact with the main circuit board (800).

13. A housing according to any of claims 9-12, wherein the spaces of the main housing (100) are formed individually so as to allow the main circuit board (800) and the display assembly to be replaced individually.

14. A housing according to any previous claim, wherein the main housing (100) comprises:
an overmolded section (127; 107, 117, 122, 132) created around a perimeter of each of the display space (105), the compartment space (115), the battery space (120) and the expansion board space (130), for sealing the corresponding space.

## Patentansprüche

1. Gehäuse für ein robustes Handgerät, das umfasst:
ein Hauptgehäuse (100), das umfasst:
einen hermetisch abgedichteten Hauptleiterplattenplatz (125), zur Unterstützung einer Hauptleiterplatte (800);
einen Anschlussplatz (115) zur Unterstützung einer Vorrichtungskomponente, wobei die Vorrichtungskomponente zum Betrieb des Handgerätes betriebsbereit an die Hauptleiterplatte (800) gekoppelt ist, wobei die Vorrichtungskomponente eine Anschlussplatte (702) umfasst, die abnehmbar an die Hauptleiterplatte (800) gekoppelt ist;
eine abnehmbare Kompartimentabdeckung zur hermetischen Abdichtung des Anschlussplatzes (115), unabhängig von der Abdichtung des Hauptleiterplattenplatzes (125), wobei die Kompartimentabdeckung einen Anschlusshalter (710) zur Unterbringung der Anschlussplatte (702) in dem Kompartimentplatz umfasst;
dass der Anschlussschalter (710) und der Anschlussplatz (702) zusammen einen Docking-Stecker (700) bilden; und
dass der Anschlussschalter (710) mit abnehmbaren Befestigungselementen an das Hauptgehäuse (100) befestigt wird, wobei von außerhalb des Hauptgehäuses (100) auf den Docking-Stecker (700) zugegriffen werden kann.

2. Gehäuse gemäß Anspruch 1, wobei:
eine zweite Vorrichtungskomponente eine Batterie in einem Batterieplatz (120) umfasst; und
eine zweite Kompartimentabdeckung (600) einen Vorsprung (606) zum Betrieb auf einem Schalter (402) zur Kommunikation mit der Hauptleiterplatte (800) umfasst, wobei der Vorsprung (606) zur Absorbierung äußerer Einflüsse auf die Abdeckung durch eine elastische Abdeckung abgedeckt wird, wenn die Abdeckung an das Hauptgehäuse (100) befestigt wird.

3. Gehäuse gemäß Anspruch 2, das weiterhin umfasst:
dass sich der Schalter (402) auf der Anschlussplatte befindet und in den Anschlussplatz (115) angeordnet wird, wenn sich die Anschlussplatte (702) in dem Anschlussplatz (115) befindet.

4. Gehäuse gemäß Anspruch 2 oder Anspruch 3, wobei die elastische Abdeckung umfasst:
eine Gummimanschette.

5. Gehäuse gemäß einem der Ansprüche 2 bis 4, wobei die zweite Vorrichtungskomponente umfasst:
eine Hauptbatterie zur Stromversorgung des Handgerätes; und
eine Reservebatterie (502) zur Stromversorgung des Handgerätes, wenn die Hauptbatterie nicht vorhanden ist, und
wobei der Batterieplatz (120) umfasst:
einen Hauptbatterieplatz (505) zum Halten der Hauptbatterie, wobei auf die Hauptbatterie durch die zweite Kompartimentabdeckung zugegriffen werden kann und die Hauptbatterie herausnehmbar in dem Hauptbatterieplatz angeordnet ist; und
einen Reservebatterieplatz (507) zum Halten der Reservebatterie (502), wobei die Reservebatterie von dem Reservebatterieplatz (507) durch den Hauptbatterieplatz (505) herausgenommen werden kann, wenn sich die Hauptbatterie nicht in dem Hauptbatterieplatz (505) befindet.

6. Gehäuse gemäß einem der vorangehenden Ansprüche, wobei der Anschlussplatz (115) durch einen entsprechenden überspritzten Abschnitt (117) und einen Kantenabschnitt (714) des Anschlusshalters (710) abgedichtet wird.

7. Gehäuse gemäß einem der vorangehenden Ansprüche, wobei das Hauptgehäuse (100) umfasst:
einen Platz (105) zum Halten eines Displays in dem Gehäuse; und/oder einen Platz (110) zum Halten einer Tastatur in dem Gehäuse; und/oder einen Platz (130) zum Halten einer Erweiterungsplatte oder einer Zusatzkomponente in dem Gehäuse,
und wobei jeder der Plätze und der Anschlussplatz (115) individuell hermetisch abgedichtet ist.

8. Gehäuse gemäß Anspruch 1, das weiterhin umfasst:
einen Tastaturplatz (110) zur Unterbringung einer abnehmbaren Tastaturanordnung (400), wobei eine Seite des Tastaturplatzes (110) durch eine Seitenwand definiert wird, die über einen Vorsprung verfügt, der sich in den Tastaturplatz (110) erstreckt, wobei die Tastaturanordnung (400) den Tastaturplatz (110) abdichtet, wenn sie in den Tastaturplatz (110) angeordnet wird,
wobei die Tastaturanordnung (400) umfasst:
ein Elastomerblech (417), das so bemessen ist, dass es eine Leiterplatte, die über einen ersten Kontakt zum Erzeugen eines Tastenanschlagsignals über eine elektrische Verbindung an die Hauptleiterplatte (800) verfügt, im Wesentlichen abdeckt, wobei das Elastomerblech (417) über einen zweiten Kontakt auf einer ersten Seite und einen Vorsprung auf einer zweiten Seite, die der ersten Seite gegenüberliegend angeordnet ist, verfügt, wobei der zweite Kontakt mit dem ersten Kontakt der Leiterplatte in Kontakt steht, wobei der Vorsprung entgegengesetzt zu dem zweiten Kontakt auf der ersten Seite angeordnet ist;
ein Tastenfeld (413) das eine Schale umfasst, die den Vorsprung des Elastomerblechs umhüllt; und
eine Tastaturblende (405), die über eine Apertur zum Empfangen des Tastenfeldes verfügt, wobei die Tastaturblende (405) über eine Seitenwand um einen Umriss der Tastaturblende (405) verfügt, wobei die Seitenwand der Tastaturblende (405) über eine Kante verfügt, die in Kontakt mit dem Elastomerblech steht, um einen abgedichteten Platz unter dem Elastomerblech zu bilden, wobei die Tastaturblende (405) in dem Tastaturplatz (110) durch eine Presspassung mit dem Vorsprung der Seitenwand, die den Tastaturplatz (110) definiert, in Position gehalten wird.

9. Gehäuse gemäß Anspruch 1, das weiterhin umfasst:
einen Displayplatz (105) zur Unterstützung einer Displayanordnung, wobei die Displayanordnung den Displayplatz (105) abdichtet,
einen Platz (110) zum Halten einer Tastatur in dem Gehäuse und/oder einen Platz (130) zum Halten einer Erweiterungsplatte oder einer Zusatzkomponente in dem Gehäuse,
dass jeder der Plätze individuell hermetisch abgedichtet ist,
dass die Displayanordnung einen Rahmen (200) umfasst, wobei der Rahmen (200) umfasst:
einen elektrischen Kontakt (211) mit einem Erdungskreis der Hauptleiterplatte (800) zum Bilden einer Abschirmung gegen elektromagnetische Störungen;
einen Umriss (209), der in einem abgedichteten Kontakt mit dem Displayplatz steht; und
eine Vertiefung (205) zum Empfangen eines Displays, wobei die Vertiefung über eine Apertur zu dem Hauptleiterplatten (800)-Platz zum Verbinden des Displays mit der Hauptleiterplatte (800) verfügt.

10. Gehäuse gemäß Anspruch 9, wobei der Umriss des Rahmens (200) unter Verwendung eines Klebstoffs an der Oberfläche des Displays abgedichtet werden kann.

11. Gehäuse gemäß Anspruch 9 oder Anspruch 10, wobei der Rahmen (200) ein Metallrahmen ist, der als eine Grundplatte fungiert.

12. Gehäuse gemäß Anspruch 9, wobei der Rahmen (200) umfasst:
eine Rückseite, die entgegengesetzt einer Seite angeordnet ist, die über den abgedichteten Umriss verfügt, wobei die Rückseite über den elektrischen Kontakt mit der Hauptleiterplatte (800) verfügt.

13. Gehäuse gemäß einem der Ansprüche 9 bis 12, wobei die Plätze des Hauptgehäuses (100) individuell gebildet werden, um zu gewährleisten, dass die Hauptleiterplatte (800) und die Displayanordnung individuell ausgetauscht werden können.

14. Gehäuse gemäß einem der vorangehenden Ansprüche, wobei das Hauptgehäuse (100) umfasst:
einen überspritzten Abschnitt (127; 107, 117, 122, 132), der zur Abdichtung des entsprechenden Platzes um einen Umriss des Displayplatzes (105), des Kompartimentplatzes (115), des Batterieplatzes (120) und des Erweiterungsplattenplatzes (130) gebildet wird.

## Revendications

1. Boîtier pour un dispositif portable robuste comportant :
un boîtier principal (100) comportant :
un espace de carte de circuit principale (125) rendu étanche par rapport à un environnement extérieur, pour supporter une carte de circuit principale (800) ;
un espace de connecteur (115) pour supporter un composant de dispositif, le composant de dispositif étant couplé de façon fonctionnelle à la carte de circuit principale (800) pour faire fonctionner le dispositif portable, le composant de dispositif comportant une carte de connecteur (702) couplée de façon amovible à la carte de circuit principale (800) ;
un couvercle de compartiment amovible pour rendre l'espace de connecteur (115) étanche par rapport à l'environnement extérieur, indépendamment de l'étanchéité de l'espace de carte de circuit principale (125), le couvercle de compartiment comportant un support de connecteur (710) pour loger la carte de connecteur (702) dans l'espace de compartiment ;
le support de connecteur (710) et la carte de connecteur (702) formant conjointement un connecteur d'accueil (700) ; et
le support de connecteur (710) étant fixé au boîtier principal (100) grâce à des fixations amovibles, dans lequel le connecteur d'accueil (700) est accessible depuis l'extérieur du boîtier principal (100).

2. Boîtier selon la revendication 1, dans lequel :
un second composant de dispositif comporte une batterie dans un espace de batterie (120) ; et
un second couvercle de compartiment (600) comporte une partie saillante (606) pour actionner un commutateur (402) afin de communiquer avec la carte de circuit principale (800), la partie saillante (606) étant recouverte par un couvercle élastique afin d'absorber un impact extérieur sur le couvercle lorsque le couvercle est fixé au boîtier principal (100).

3. Boîtier selon la revendication 2, comportant en outre :
le commutateur (402) se trouvant sur la carte de connecteur et placé dans l'espace de connecteur (115) lorsque la carte de connecteur (702) se trouve dans l'espace de connecteur (115).

4. Boîtier selon la revendication 2 ou la revendication 3, dans lequel le couvercle élastique comporte un manchon en caoutchouc.

5. Boîtier selon l'une quelconque des revendications 2-4, dans lequel le second composant de dispositif comporte:
une batterie principale pour délivrer de l'énergie au dispositif portable ; et
une batterie de secours (502) pour délivrer de l'énergie au dispositif portable lorsque la batterie principale est absente, et
dans lequel l'espace de batterie (120) comporte :
un espace de batterie principale (505) pour contenir la batterie principale, la batterie principale étant accessible par l'intermédiaire du second couvercle de compartiment et placée de façon amovible dans l'espace de batterie principale ; et
un espace de batterie de secours (507) pour contenir la batterie de secours (502), la batterie de secours étant amovible de l'espace de batterie de secours (507) par l'intermédiaire de l'espace de batterie principale (505) lorsque la batterie principale est absente dans l'espace de batterie principale (505).

6. Boîtier selon l'une quelconque des revendications précédentes, dans lequel l'espace de connecteur (115) est rendu étanche par une section surmoulée correspondante (117) et une section de bord (714) du support de connecteur (710).

7. Boîtier selon l'une quelconque des revendications précédentes, dans lequel le boîtier principal (100) comporte au moins l'un :
d'un espace (105) pour contenir un affichage dans le boîtier ;
d'un espace (110) pour contenir un clavier dans le boîtier ; et
d'un espace (130) pour contenir une carte d'extension ou un composant auxiliaire dans le boîtier,
et dans lequel chacun des espaces et l'espace de connecteur (115) est rendu étanche individuellement par rapport à l'environnement extérieur.

8. Boîtier selon la revendication 1, comportant en outre :
un espace de clavier (110) pour loger un assemblage de clavier amovible (400), un côté de l'espace de clavier (110) étant défini par une paroi latérale possédant une partie saillante s'étendant dans l'espace de clavier (110), l'assemblage de clavier (400) rendant l'espace de clavier (110) étanche lorsqu'il est placé dans l'espace de clavier (110),
l'assemblage de clavier (400) comportant :
une feuille en élastomère (417) dimensionnée pour recouvrir sensiblement une carte de circuit imprimé possédant un premier contact pour générer un signal de pression de touche sur la carte de circuit principale (800) par l'intermédiaire d'une connexion électrique, la feuille en élastomère (417) possédant un second contact sur un premier côté et une partie saillante sur un second côté opposé au premier côté, le second contact étant en contact avec le premier contact de la carte de circuit imprimé, la partie saillante étant opposée au second contact sur le premier côté ;
un clavier (413) comportant une enveloppe entourant la partie saillante de la feuille en élastomère ; et
un habillage de clavier (405) possédant une ouverture pour recevoir le clavier, l'habillage de clavier (405) possédant une paroi latérale autour d'un périmètre de l'habillage de clavier (405), la paroi latérale de l'habillage de clavier (405) possédant un bord en contact avec la feuille en élastomère pour former un espace étanche sous la feuille en élastomère, l'habillage de clavier (405) étant maintenu en place dans l'espace de clavier (110) par un ajustage serré avec la partie saillante de la paroi latérale définissant l'espace de clavier (110).

9. Boîtier selon la revendication 1, comportant en outre :
un espace d'affichage (105) pour supporter un assemblage d'affichage, l'assemblage d'affichage rendant l'espace d'affichage (105) étanche,
au moins l'un d'un espace (110) pour contenir un clavier dans le boîtier et d'un espace (130) pour contenir une carte d'extension ou un composant auxiliaire dans le boîtier,
chacun des espaces étant rendu étanche individuellement par rapport à l'environnement extérieur,
l'assemblage d'affichage comportant un cadre (200), le cadre (200) comprenant :
un contact électrique (211) comportant un circuit de mise à la masse de la carte de circuit principale (800), pour former un blindage aux interférences électromagnétiques ;
un périmètre (209) en contact étanche avec l'espace d'affichage ; et
une zone évidée (205) pour recevoir un affichage, la zone évidée possédant une ouverture s'ouvrant sur l'espace de carte de circuit principale (800) pour relier l'affichage à la carte de circuit principale (800).

10. Boîtier selon la revendication 9, dans lequel le périmètre du cadre (200) peut être rendu étanche par rapport à la surface de l'affichage en utilisant un matériau adhésif.

11. Boîtier selon la revendication 9 ou la revendication 10, dans lequel le cadre (200) est un cadre métallique agissant en tant que plan de mise à la masse.

12. Boîtier selon la revendication 9, dans lequel le cadre (200) comporte :
un côté arrière opposé au côté possédant le périmètre rendu étanche, le côté arrière possédant le contact électrique avec la carte de circuit principale (800).

13. Boîtier selon l'une quelconque des revendications 9-12, dans lequel les espaces du boîtier principal (100) sont formés individuellement de manière à permettre à la carte de circuit principale (800) et à l'assemblage d'affichage d'être remplacés individuellement.

14. Boîtier selon l'une quelconque des revendications précédentes, dans lequel le boîtier principal (100) comporte:
une section surmoulée (127 ; 107, 117, 122, 132) créée autour d'un périmètre de chacun de l'espace d'affichage (105), de l'espace de compartiment (115), de l'espace de batterie (120) et de l'espace de carte d'extension (130), pour rendre étanche l'espace correspondant.
